# EUROPEAN PATENT APPLICATION

(11) **EP 3 974 775 A1**
(43) Date of publication of application: **30.03.2022**
(21) Application number: 21198027.1
(22) Date of filing: 21.09.2021
(51) Int. Cl.: G01C 15/00, G01S 17/04, G01S 17/06, G01S 17/66, G01S 7/481

(54) **TRACKING METHOD, LASER SCANNER, AND TRACKING PROGRAM**

(30) Priority: 28.09.2020 JP 2020162088
(71) Applicant: TOPCON CORPORATION, Tokyo 174-8580 (JP)
(72) Inventor: SASAKI, Takeshi, Tokyo-to, 174-8580 (JP); KUMAGAI, Kaoru, Tokyo-to, 174-8580 (JP)
(74) Representative: Louis Pöhlau Lohrentz

(57) **Abstract**

A laser scanner comprises a distance measuring module for performing the distance measurement, an optical axis deflector for scanning the pulsed distance measuring light, a tracking module for performing tracking, and a control module for controlling the distance measuring module, the optical axis deflector, and the tracking module. The control module detects a moving object from the point cloud data of the predetermined scan range, sets a local scan area including the object, acquires the local point cloud data of the local scan area, calculates a center of gravity position of the local point cloud data, and make the tracking module to track the object based on the calculated center of gravity position.

## Description

### BACKGROUND OF THE INVENTION

The present invention relates to a tracking method, a laser scanner and a tracking program which have a tracking function.

There is a laser scanner as an apparatus which scans a pulsed distance measuring light and acquires a point cloud data.

Usually, the laser scanner is a surveying instrument which rotatably irradiates a distance measuring light in an omnidirectional manner and acquires a point cloud data, and hence the laser scanner does not have a function to track an object.

Japanese Patent Application Publication No. 2020-51818 discloses a laser scanner which two-dimensionally scans a predetermined range and shows that this laser scanner has a tracking function. In the laser scanner of Japanese Patent Application Publication No. 2020-51818, a tracking optical system is provided, and a tracking target is a prism or the like with retroreflective characteristics.

Therefore, the optical system is complicated and the tracking target is restricted.

### SUMMARY OF INVENTION

It is an object of the present invention to enable a scanner to more easily track and to enable the scanner to track an object with no retroreflective characteristics.

To attain the object as described above, a tracking method according to the present invention comprises, in a laser scanner, steps of scanning a predetermined range at a predetermined cycle and acquiring a point cloud data, comparing the point cloud data every cycle, calculating deviations by comparison of the point cloud data, setting a local area including measuring points where the deviation are calculated, locally scanning the local area and acquiring a local point cloud data, calculating a center of gravity position of the local point cloud data, and performing the tracking based on the center of gravity position.

Further, a laser scanner according to the present invention comprises a distance measuring module for irradiating a pulsed distance measuring light, receiving a reflected light, and performing the distance measurement, an optical axis deflector for scanning a predetermined scan range with the pulsed distance measuring light at a predetermined cycle, a tracking module for performing tracking based on a distance measurement result of the distance measuring module, and a control module for controlling the distance measuring module, the optical axis deflector, and the tracking module, wherein the control module is configured to acquire a point cloud data of the predetermined scan range, perform a comparison between distance measurement results of the point cloud data every cycle, detect a moving object based on the comparison, set a local scan area including the object, locally scan the local scan area, acquire a local point cloud data, calculate a center of gravity position of the local point cloud data, and make the tracking module to track the object based on the calculated center of gravity position.

Further, in the laser scanner according to a preferred embodiment, the optical axis deflector has a pair of disk prisms, is configured to deflect the distance measuring light and perform a scan by the independent rotation of each disk prism, and performs a local scan by the rotational control of each disk prism.

Further, in the laser scanner according to a preferred embodiment, an image pickup module having an angle of view larger than a maximum deflection range of the optical axis deflector and a display module for displaying an image acquired by the image pickup module are further included, wherein the local scan area is displayed on the display module.

Further, in the laser scanner according to a preferred embodiment, the laser scanner comprises a horizontal rotation driver, a vertical rotation driver and an image pickup module, wherein the image pickup module is designed such that a position of a pixel with respect to an image center of the image pickup module corresponds to a deflection angle with respect to a reference optical axis of the optical axis deflector, a deflection angle of the object is detected from an image, and the laser scanner is configured to rotate by the horizontal rotation driver and the vertical rotation driver in such a manner that the object is placed at the image center.

Furthermore, a tracking program according to the present invention, in a laser scanner, makes a control module to execute each step described above.

According to the present invention, a tracking method comprises, in a laser scanner, steps of scanning a predetermined range at a predetermined cycle and acquiring a point cloud data, comparing the point cloud data every cycle, calculating deviations by comparison of the point cloud data, setting a local area including measuring points where the deviation are calculated, locally scanning the local area and acquiring a local point cloud data, calculating a center of gravity position of the local point cloud data, and performing the tracking based on the center of gravity position. As a result, without the need to provide the laser scanner with a tracking optical system and without the need to provide the object with a retro-reflector, it is possible to simply track the object.

Further, according to the present invention, a laser scanner comprises a distance measuring module for irradiating a pulsed distance measuring light, receiving a reflected light, and performing the distance measurement, an optical axis deflector for scanning a predetermined scan range with the pulsed distance measuring light at a predetermined cycle, a tracking module for performing tracking based on a distance measurement result of the distance measuring module, and a control module for controlling the distance measuring module, the optical axis deflector, and the tracking module, wherein the control module is configured to acquire a point cloud data of the predetermined scan range, perform a comparison between distance measurement results of the point cloud data every cycle, detect a moving object based on the comparison, set a local scan area including the object, locally scan the local scan area, acquire a local point cloud data, calculate a center of gravity position of the local point cloud data, and make the tracking module to track the object based on the calculated center of gravity position. As a result, without the need to be provided with a tracking optical system and without the need to provide the object with a retro-reflector, it is possible to simply track the object.

### BRIEF DESCRIPTION OF DRAWINGS

FIG.1 is a schematic drawing of a laser scanner according to an embodiment of the present invention.
FIG.2 is a schematic block diagram of the laser scanner.
FIG.3A and FIG.3B are explanatory drawings showing a function of an optical axis deflector of the laser scanner.
FIG.4 is an explanatory drawing showing an example of a scan pattern formed by the optical axis deflector.
FIG.5 is a flowchart showing an operation of the laser scanner according to this embodiment.
FIG.6 are explanatory drawings of a tracking operation of the laser scanner, where FIG.6A shows an n-1th scan pattern, FIG.6B shows an nth scan pattern, and FIG.6C shows a state where a deviation between scan patterns is obtained.
FIG.7 is an explanatory drawing showing a state of transiting from a scan pattern to a local pattern.
FIG.8A and FIG.8B are explanatory drawings of a case where the local pattern is moved to a center of an image.
FIG.9 is an explanatory drawing showing an application example of the present embodiment.

### DETAILED DESCRIPTION OF THE PREFERRED EMBODIMENT

A description will be given below on an embodiment of the present invention by referring to the attached drawings.

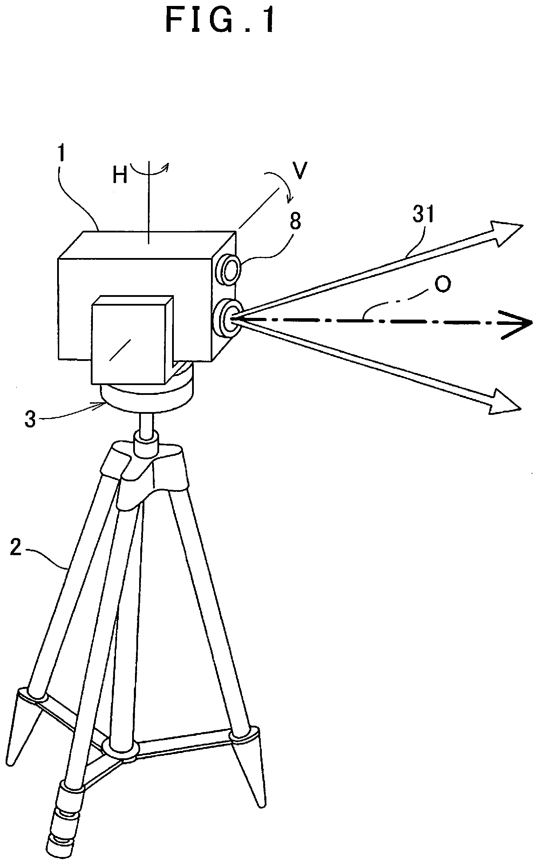

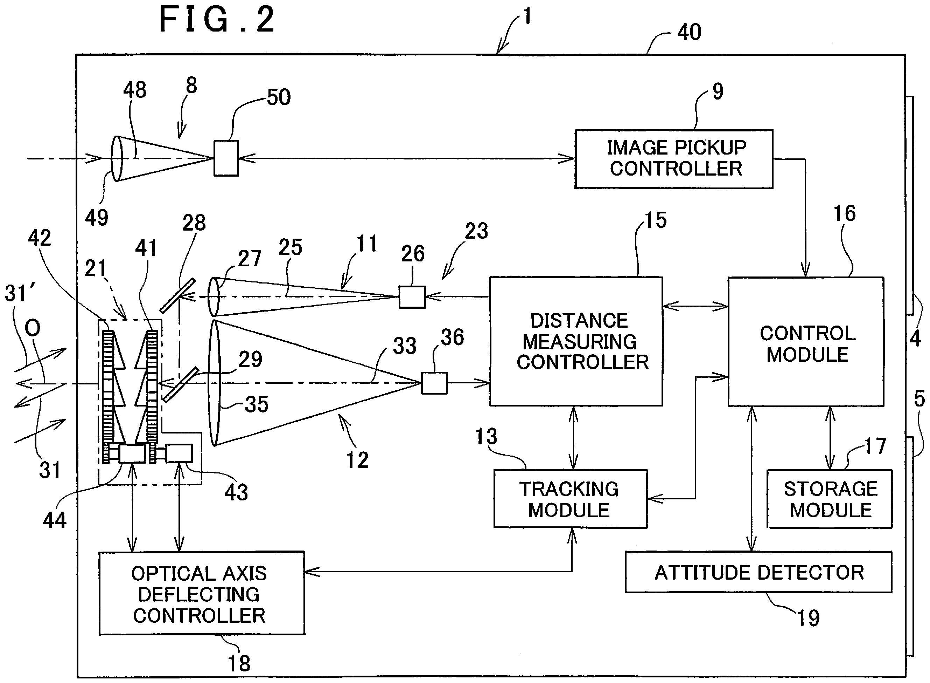

First, a description will be given on a laser scanner according to an embodiment of the present invention by referring to FIG.1 and FIG.2.

In FIG.1, a reference numeral 1 denotes a laser scanner, and a reference numeral 2 denotes a tripod as a supporting device.

The laser scanner 1 is provided on the supporting device 2 via a frame base 3. The laser scanner 1 includes a display module 4 such as a liquid crystal display on a rear surface thereof, and further includes an operation module 5 consisting of a switch group. The display unit 4 may be configured as a touch panel and also function as the operation module. Further, each of the display module and the operation module may be a tablet connected in a wireless manner or a PC connected via the Internet or the like.

The frame base 3 includes a vertical rotation driver (not shown) and a horizontal rotation driver (not shown), the vertical rotation driver is configured to vertically rotate the laser scanner 1 around a vertical rotation shaft V, and the horizontal rotation driver is configured to horizontally rotate the laser scanner 1 around a horizontal rotation shaft H. Further, the vertical rotation driver is capable of detecting a vertical rotation amount, and the horizontal rotation driver is capable of detecting a horizontal rotation amount.

The driving of each of the vertical rotation driver and the horizontal rotation driver is controlled by a control module 16 (to be described later).

The laser scanner 1 mainly is provided with an image pickup module 8, an image pickup controller 9, a distance measuring light projecting module 11, a light receiving module 12, a tracking module 13, a distance measuring controller 15, the control module 16, a storage module 17, an optical axis deflecting controller 18, an attitude detector 19 and an optical axis deflector 21, and they are accommodated in a casing 40 and integrated. It is to be noted that the distance measuring light projecting module 11, the light receiving module 12, the distance measuring controller 15, the optical axis deflector 21, and the like make up a distance measuring module 23 having a function as an electronic distance meter.

As each of the distance measuring controller 15 and the control module 16, a CPU specialized for this embodiment, a general-purpose CPU, a built in CPU, a microprocessor, or the like is used. Further, as the storage module 17, a semiconductor memory such as a RAM, a ROM, or a Flash ROM, or a DRAM, a magnetic recording memory such as an HDD, or an optical recording memory such as a CDROM is used.

In the storage module 17 are stored various kinds of programs configured to carry out this embodiment, e.g., a distance measurement program to perform and control the distance measurement, an optical axis deflection program to calculate an optical axis direction, control the optical axis deflection, and measure a horizontal angle and a vertical angle of the optical axis, a calculation program to calculate three-dimensional data based on a distance measurement result and a calculation result of the optical axis direction, a tracking program to perform a tracking based on a measurement result, an image processing program to control the image pickup module 8 and process images, and the like. Further, various kinds of data, e.g., measurement data, a direction angle, attitude detection data, and image data are stored in the storage module 17.

The distance measurement controller 15 and the control module 16 develop the stored programs and execute a necessary operation and control at a required timing, respectively.

The control module 16 controls the optical axis deflector 21 via the optical axis deflection controller 18. The control module 16 controls the deflection of the distance measuring optical axis via the optical axis deflector 21. Further, the control module 16 performs a integration control over the distance measuring controller 15 and the tracking module 13, and a synchronous control for a distance measurement, an image pickup, and a tracking, and the like.

Further, the control module 16 is configured to control a vertical rotation driver (not shown) and a horizontal rotation driver (not shown) with which the frame base 3 is provided, to set a direction of the laser scanner 1, and to change a direction of the laser scanner 1 in correspondence with a measurement situation.

Further, the control module 16 is configured to develop the distance measurement program, the optical axis deflection program, and the like, to scan a measurement area with a distance measuring light, to perform a measurement mode for acquiring point cloud data of the measurement area, and is configured to develop the tracking program and to perform a tracking mode for tracking a specific object in the measurement area. It is to be noted that the measurement area may be set in such a manner that the measurement area coincides with or substantially coincides with an angle of view of the image pickup module 8, or is a range larger than the angle of view of the image pickup module 8.

The attitude detector 19 detects a tilt of the laser scanner 1 with respect to the horizontality or the verticality, and a detection result is input to the control module 16. Further, as the attitude detector 19, a tilt detector such as a tilt sensor is used, and an attitude detection device disclosed in Japanese Patent Application Publication No. 2016-151423 can be used. The attitude detection device of Japanese Patent Application Publication No. 2016-151423 is capable of detecting a tilt of 360° or more in all directions in real time.

The control module 16 acquires a tilt angle with respect to the horizontality and a tilt direction of the laser scanner 1 from the attitude detector 19 in real time at the time of the measurement. Further, the control module 16 corrects a measurement result based on the tilt angle and the tilt direction as acquired from the attitude detector 19. Therefore, the laser scanner 1 does not have to be leveled up at the time of the measurement.

The distance measuring light projecting module 11 has a projecting optical axis 25, and a light emitter 26, e.g., a laser diode (LD) is provided on the projecting optical axis 25. Further, on the projecting optical axis 25, a projecting lens 27 is provided. The projecting optical axis 25 is deflected by mirrors 28 and 29 in such a manner that the projecting optical axis 25 coincides with a light receiving optical axis 33 (to be described later).

The light emitter 26 pulse-emits a laser beam or burst-emits the laser beam. The distance measuring light projecting module 11 projects a pulsed laser beam (or a burst-emitted laser beam) emitted from the light emitter 26 as the distance measuring light 31. It is to be noted that the burst emission is disclosed in Japanese Patent Application Publication No. 2017-106813.

The distance measuring light 31 is turned to a parallel light flux by the projecting lens 27, and irradiated through the optical axis deflector 21.

A description will be given on the light receiving module 12. A reflected distance measuring light 31' from an object enters the light receiving module 12 via the optical axis deflector 21. The light receiving module 12 has the light receiving optical axis 33, and the projection optical axis 25 deflected by the mirrors 28 and 29 coincides with the light receiving optical axis 33.

A state where the projecting optical axis 25 coincides with the light receiving optical axis 33 is determined as a distance measuring optical axis (see FIG.1).

The optical axis deflector 21 is arranged on the distance measuring optical axis. A straight optical axis as transmitted through the center of the optical axis deflector 21 is a reference optical axis O. The reference optical axis O coincides with the projecting optical axis 25, the light receiving optical axis 33, and the distance measuring optical axis when the reference optical axis O is not deflected by the optical axis deflector 21.

An focusing lens 35 is arranged on the light receiving optical axis 33 passing through the optical axis deflector 21. On the light receiving optical axis 33, a photodetector 36 is provided. The photodetector 36 is, e.g., an avalanche photodiode (APD) or an equivalent photoelectric conversion element.

The focusing lens 35 focuses the reflected distance measuring light 31' on the photodetector 36. The photodetector 36 receives the reflected distance measuring light 31', and produces a light receiving signal. The light receiving signal is input to the distance measuring controller 15. The distance measuring controller 15 performs the distance measurement to the object (the optical wave distance measurement) based on a light emitting timing of the distance measuring light, a light receiving timing of the reflected distance measuring light, and the light velocity.

As the distance measurement, the prism measurement in which the object has the retroreflective ability or the non-prism measurement in which the object has no retroreflective ability is performed.

The optical axis deflector 21, the focusing lens 35, the photodetector 36, and the like, make up the light receiving module 12.

As described later, the tracking module 13 is configured to recognize a portion, where changes of distance measurement value are detected within the point cloud data, as a tracking target and to track the tracking target.

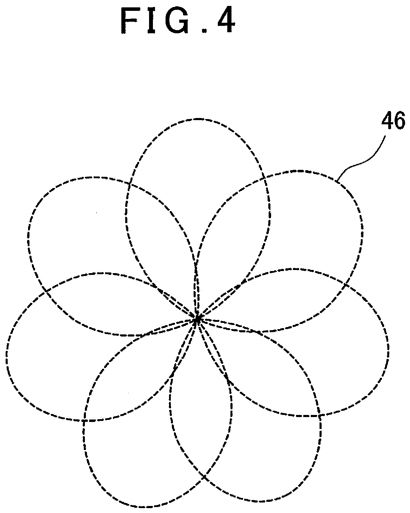

A description will be given on the optical axis deflector 21 by referring to FIG.4.

The optical axis deflector 21 has a pair of disk prisms 41 and 42, each of the disk prisms 41 and 42 has a discoid shape with the same diameter and is constituted of a plurality of prism columns, and by changing a relative rotation angle of both the disk prisms 41 and 42, an optical axis is deflected in a necessary direction.

The disk prisms 41 and 42 are independently rotated by respective motors 43 and 44, the motors 43 and 44 are driven and controlled by the optical axis deflecting controller 18, and rotation angles and rotating positions of the disk prisms 41 and 42 are detected by the optical axis deflecting controller 18.

It is to be noted that the optical axis deflector 21 is disclosed in Japanese Patent Application Publication No. 2016-161411.

By a combination of rotating positions of the disk prism 41 and the disk prism 42, the optical axis deflector 21 is capable of arbitrarily changing a deflection angle and a deflecting direction of the distance measuring light 31 as projected with respect to the reference optical axis O.

In a state where a positional relationship between the disk prism 41 and the disk prism 42 is fixed (in a state where a deflection angle acquired by the disk prism 41 and the disk prism 42 is fixed), when integrally rotating the disk prism 41 and the disk prism 42 by the motors 43 and 44, a locus drawn by the distance measuring light 31 transmitted through the distance measuring light deflector forms a circle with the reference optical axis O as a center.

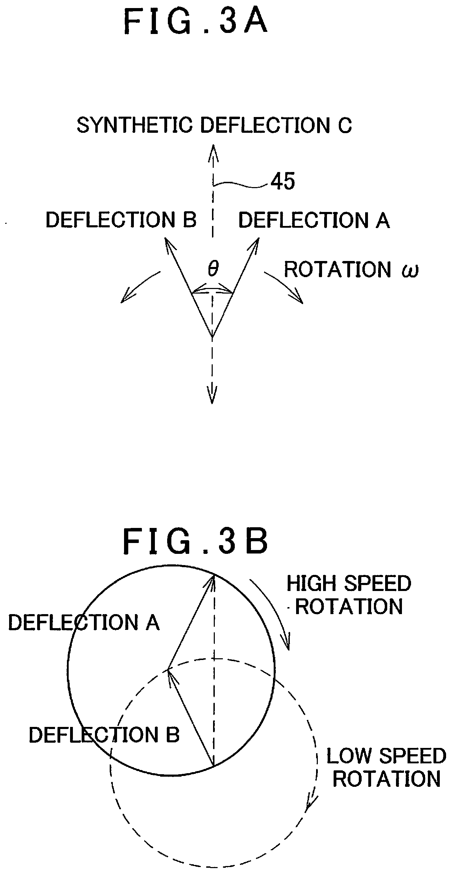

Further, as shown in FIG.3A, if a deflecting direction of an optical axis deflected by the disk prism 41 is assumed to be a deflection A and a deflecting direction of an optical axis deflected by the disk prism 42 is assumed to be a deflection B, a deflection of the optical axis provided by the disk prisms 41 and 42 become a synthetic deflection C as an angular difference θ between the disk prisms 41 and 42.

Therefore, when the disk prism 41 and the disk prism 42 are rotated in opposite directions at an equal speed, the distance measuring light 31 can be reciprocated for a scan with a linear locus 45 in a direction of the synthetic deflection C.

Further, as shown in FIG.3B, when the disk prism 42 is rotated at a rotating speed slower than a rotating speed of the disk prism 41, the distance measuring light 31 is rotated while gradually increasing an angular difference θ. Therefore, a scan locus of the distance measuring light 31 becomes a spiral form.

By individually controlling rotating directions and rotating speeds of the disk prism 41 and the disk prism 42, it is possible to acquire the various kinds of two-dimensional scan patterns having the scan locus of the distance measuring light 31 with the reference optical axis O as a center.

For example, when the disk prism 41 of the disk prism 41 and the disk prism 42 is rotated in a forward direction at 17.5 Hz and the other disk prism 42 is rotated in a reverse direction at 5 Hz, a two-dimensional closed loop scan pattern with a flower petal shape (a flower petal pattern 46 (a hypotrochoid curve)) such as shown in FIG.4 is acquired.

Further, the distance measuring light 31 is pulse-emitted and a point irradiated by each pulsed light is a measuring point. The distance measurement (a distance) and the angle measurement (a horizontal angle, a vertical angle) are performed per pulsed light and three-dimensional point cloud data along a scan locus can be acquired.

In case of performing a scan with the flower petal pattern 46, when rotating the pattern at a predetermined angle every scan pattern, a point cloud density increases.

Further, the individual rotational control of the disk prisms 41 and 42 enables forming a scan pattern within a maximum deflection range of the optical axis deflector 21 and performing a scan, forming a scan pattern in a predetermined range set within the maximum deflection range and performing a scan, and further performing a scan in a local range restricted within the maximum deflection range or the predetermined range (which will be referred to as a local scan).

A description will be given on the image pickup module 8.

The image pickup module 8 has an optical axis 48 which is parallel to the reference optical axis O, and an image pickup lens 49 and an image pickup element 50 are provided on the optical axis 48. The image pickup module 8 is capable of acquiring an image at a larger angle of view than a maximum deflection angle of the optical axis deflector 21. The acquired image is displayed in the display module 4. As the image pickup element 50, a CCD, a CMOS sensor or the like which is constituted of an aggregation of pixels is used, and a position of each pixel in the image pickup element 50 is capable of being identified.

The optical axis 48 passes through the center of the image pickup element 50, and a position of the pixel on the image pickup element 50 is capable of being identified. For example, each pixel has pixel coordinates in a coordinate system (an X-Y coordinate system) with the center of the image pickup element 50 as an origin, and pixel coordinates (the positional information) are included in a light receiving signal from each pixel.

Further, on an image, the center of the image pickup element 50 is a position of the reference optical axis O, and a horizontal angle and a vertical angle with respect to the reference optical axis are set so as to correspond to the pixel coordinates (x, y). Therefore, the horizontal angle and the vertical angle with respect to the reference optical axis O are configured to be acquired from a position on the image.

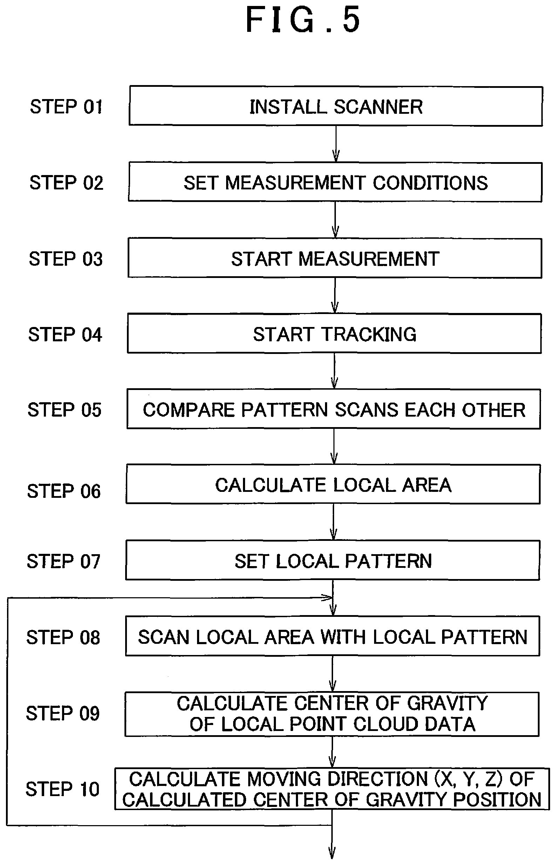

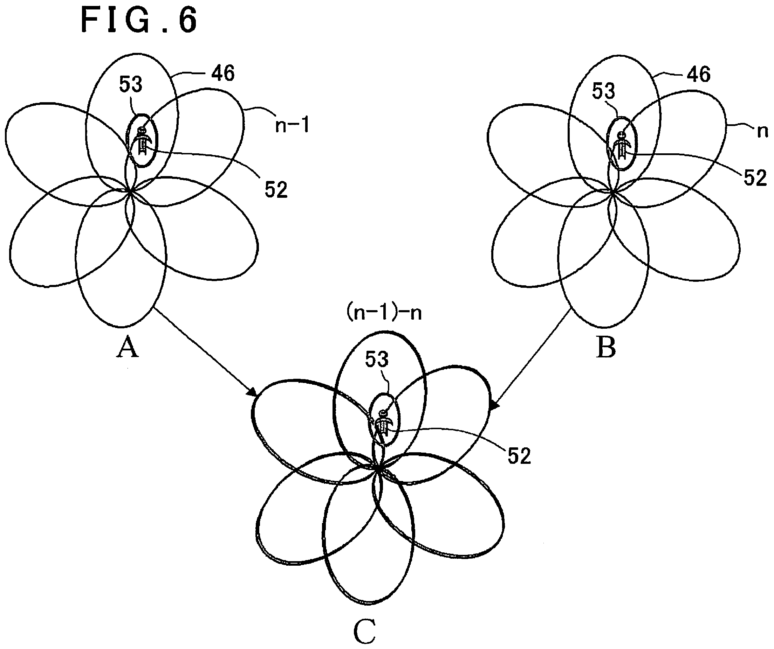

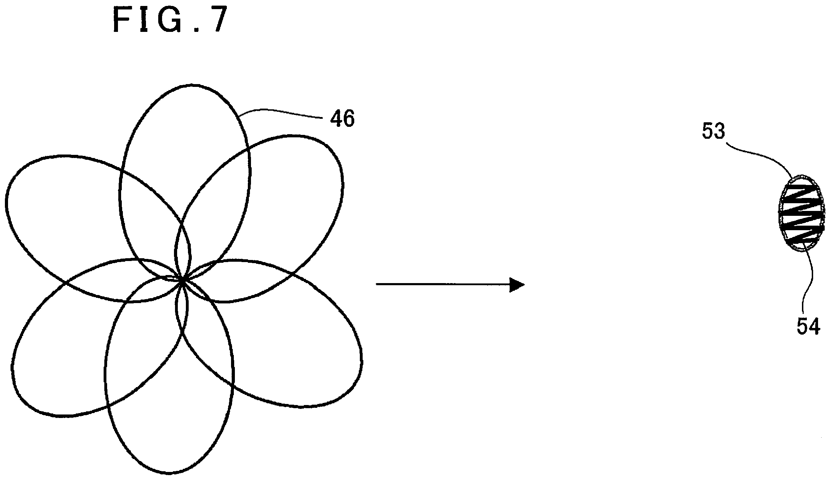

A description will be given on the measurement and a tracking operation in this embodiment by referring to FIG.5, FIG.6, and FIG.7.
(Step 01) The laser scanner 1 is installed at a necessary position. The laser scanner 1 is directed to a measuring direction by the frame base 3. It is confirmed by an image displayed on the display module 4 whether the measuring direction includes an object.
(Step 02) Measurement conditions are set. As the measurement conditions, a scan area, a point cloud density, a scan speed, a scan pattern, and the like are set. The scan area can be set by referring to the image. The scan area is set as, e.g., a maximum deflection range and, as a scan pattern, for example, the flower petal pattern 46 shown in FIG.4 is adopted. As to the point cloud density, the point cloud density is reduced in a case where the object is formed of surfaces, and the like and the point cloud density is increased in a case where the object has a complicated shape. It is to be noted that the density of the point cloud data may be automatically changed by the control module 16 based on a measurement result. The scan pattern is arbitrary and it may be only the scan pattern as acquired by a two-dimensional scan.
(Step 03) When the measurement conditions are set, a measurement is started by a measurement mode. A scan is started in the set scan area, a point cloud data is acquired along a locus of the scan. The data of each point of the point cloud is the three-dimensional data (x, y, z) constituted of a horizontal angle, a vertical angle, and a distance measurement value.
(Step 04) When the point cloud data of a measurement area is acquired, a tracking mode is selected. In the tracking mode, a direction of the laser scanner 1 is fixed, a scan pattern 46 is carried out in the measurement area. As to the execution of the scan pattern, the completion of a one-scan pattern is determined as a one-pattern scan, and a pattern scan may be continuously carried out or may be carried out at predetermined time intervals. That is, a pattern scan is carried out at a predetermined cycle.
(Step 05) The three-dimensional data of a previous (n-1th cycle) one-pattern scan is compared with that of a subsequent (nth cycle) one-pattern scan for each measuring point (see FIG.6). If nothing moves in the scan range, there is no change in measurement data of all the respective measuring points. In particular, there is no change in distance measurement data.
   If a moving object 52 is present in the scan area, when taking a difference between the pattern scan in the n-1th cycle and the one-pattern scan in the nth cycle, deviations are produced in the measurement data of measuring points corresponding to the moving object 52. Therefore, the deviations of the measuring points are calculated.
(Step 06) The measuring points with the deviations are extracted, and the moving object 52 is detected. Further, an area including the measuring points with the deviations is calculated, and further a local area 53 is calculated in such a manner that the local area 53 has a necessary margin with respect to the area.
   As a shape of the local area 53, a rectangle, a circle, an ellipse, or the like, which is compatible with the shape of the extracted measuring point group, is selected as appropriate.
(Step 07) An appropriate pattern for scanning the local area 53 (which will be referred to as a local scan hereinafter) is calculated, and set as a local scan pattern 54. When the local scan pattern 54 is set, along with a scan by the scan pattern 46, the control module 16 controls the optical axis deflector 21 via the tracking module 13 so as to locally scan the local area 53 at a predetermined cycle. The set local area 53 is displayed on the display module 4.
(Step 08) The local scan is performed, and the point cloud data is acquired every local scan. The point cloud included in the local scan pattern 54 is determined as a local point cloud, and a center of gravity position (x, y, z) of the local point cloud data is calculated for each local scan pattern. The tracking module 13 moves the local area 53 in accordance with the movement of the object based on the center of gravity position as calculated, and performs the tracking. A state of the tracking and the local area 53 moved by the tracking are displayed on the display module 4 in real time.
   It is to be noted that the local point cloud data may be acquired by extracting data belonging to the local area 53 from the point cloud data as acquired by performing the scan pattern 46.
(Step 09) The center of gravity position of the local point cloud data of the (n-1st cycle) is compared with the center of gravity position of the local point cloud data of the (nth cycle), and a moving direction and a moving amount of the center of gravity are calculated.
(Step 10) In case of continuing the tracking mode, the local scan is continuously performed every cycle, the local point cloud data is acquired, and the center of gravity position of the local point cloud data and a moving direction and a moving amount of the center of gravity are three-dimensionally calculated. In the tracking state, since a scan range is restricted to a local area, the tracking is performed with a small data amount in a short time.

Since the local area is intensively scanned, a shape, an attitude, and the like of the object can be accurately detected.

Thus, according to the present embodiment, a thing moving in the scan area can be identified, and a moving direction and a moving amount can be three-dimensionally measured. Further, in case of performing the tracking, a retro-reflector such as a prism does not have to be provided on the object.

When storing and setting a sample image of the object and specifying a predetermined object (the sample image), the control module 16 is capable of automatically recognizing the object from an image, which the image pickup module 8 acquires, by the image recognition, e.g., by image-matching the image acquired by the image pickup module 8 with the sample image, and of locally scanning a vicinity of a moving object in the image.

Alternatively, a worker may specify a local area on the display module 4, perform the local scan, and start the tracking by the operation module 5. In this case, a scan using the scan pattern 46 may be omitted.

Next, in a case where the object greatly moves or its moving speed is high and the object exceeds a deflection range provided by the optical axis deflector 21, the laser scanner 1 is rotated in the horizontal direction and the vertical direction by the frame base 3 while performing the tracking, and the object can be controlled to be constantly placed in the vicinity of the reference optical axis O or the center of an image acquired by the image pickup module 8.

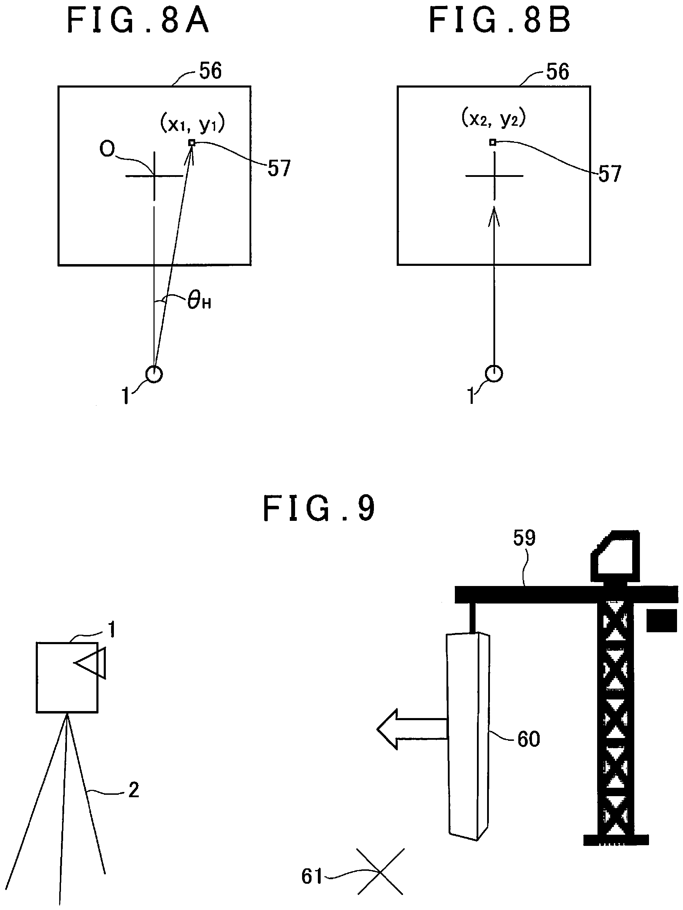

In FIG.8, a reference numeral 56 denotes an image acquired by the image pickup module 8, and FIG.8 schematically shows a relationship with the laser scanner 1, and a reference numeral 1 in the drawing denotes a measurement center (a reference position) of the laser scanner.

A reference sign O denotes an image center. The image center coincides with the reference optical axis O. Further, a point 57 in the image 56 represents a center of gravity position acquired based on a local scan. Assuming that coordinates of the point 57 in the image are (x1, y1), (x1) correspond to a horizontal angle θH with respect to the reference optical axis O, and (y1) corresponds to a vertical angle θV with respect to the reference optical axis O. A distance to the object is represented as (z).

In case of placing the point 57 at the center of the image 56, rotating the laser scanner 1 θH in a clockwise direction can place the point at the center of the image in the horizontal direction. Further, in case of placing the point 57 at the image center, further rotating the laser scanner 1 θV in a vertically upward direction can suffice. It is to be noted, in a case where the start of the measurement is determined as a reference, θH and θV could be added to a horizontal angle and a vertical angle of measurement results, respectively.

Thus, since a position (three-dimensional coordinates) of a moving object can be determined from a measurement result of the local scan, it is possible to track in a range exceeding a maximum deflection angle of the optical axis deflector 21.

Further, when losing the object during a tracking operation, by repeating Step 01 to Step 09, it is possible to restore the tracking.

FIG.9 shows an application example of the present embodiment.

In FIG.9, a reference numeral 59 denotes a crane, and a reference numeral 60 denotes a structural member of an architectural structure, e.g., a concrete column.

The laser scanner 1 is installed near an assembling position 61 of the structural member 60. The positional information of the assembling position 61, a shape of an installing place, and the like are input in the laser scanner 1 in advance. Further, if a shape of a tracking target is known from BIM (Building Information Modeling) or the design data, the shape is fitted to the point cloud data, and a position of the tracking target is displayed on a display unit (not shown).

The laser scanner 1 is directed toward the structural member 60, a scan is performed in a maximum deflection range by a two-dimensional pattern, and the moving structural member 60 is detected. A local area is set based on a detection result, a local scan pattern is produced in accordance with a shape of the local area, a local scan is performed, and the tracking is carried out.

In the local scan, since a local range is intensively scanned, the point cloud density is high, and a shape, an attitude, a tilt of the structural member 60 can be recognized based on the point cloud data. Further, the resulting data as acquired is the three-dimensional data, and by acquiring the three-dimensional data (x, y, z) in real time and analyzing a change in the three-dimensional data, it is possible to calculate a moving speed and a moving direction of the structural member 60.

It is to be noted that, needless to say, the local scan pattern is not fixed, and an optimum local scan pattern is appropriately produced in accordance with a change in attitude, a change in direction, a change in tilt, and the like of the structural member 60.

Further, based on the positional information of the assembling position 61 and a measurement result in the tracking of the structural member 60, it is possible to accurately instruct to a crane operator on the movement to a destination point and a direction of the structural member 60.

## Claims

1. A tracking method comprising: in a laser scanner (1), steps of scanning a predetermined range at a predetermined cycle and acquiring a point cloud data, comparing said point cloud data every cycle, calculating deviations by comparison of said point cloud data, setting a local area (53) including measuring points where said deviation are calculated, locally scanning said local area and acquiring a local point cloud data, calculating a center of gravity position of said local point cloud data, and performing the tracking based on said center of gravity position.

2. A laser scanner comprising:
a distance measuring module (23) for irradiating a pulsed distance measuring light (31), receiving a reflected light (31'), and performing the distance measurement, an optical axis deflector (21) for scanning a predetermined scan range with said pulsed distance measuring light at a predetermined cycle, a tracking module (13) for performing tracking based on a distance measurement result of said distance measuring module, and a control module (16) for controlling said distance measuring module, said optical axis deflector, and
said tracking module, wherein said control module is configured to acquire a point cloud data of said predetermined scan range, perform a comparison between distance measurement results of said point cloud data every cycle, detect a moving object based on said comparison, set a local scan area including said object, locally scan said local scan area, acquire a local point cloud data, calculate a center of gravity position of said local point cloud data,
and make said tracking module to track said object based on said calculated center of gravity position.

3. The laser scanner according to claim 2, wherein said optical axis deflector (21) has a pair of disk prisms (41, 42), is configured to deflect said distance measuring light (31) and perform a scan by the independent rotation of each disk prism, and performs a local scan by the rotational control of each disk prism.

4. The laser scanner according to claim 2 or 3, further comprising an image pickup module (8) having an angle of view larger than a maximum deflection range of said optical axis deflector (21), and a display module (4) for displaying an image (56) acquired by said image pickup module, wherein said local scan area is displayed on said display module.

5. The laser scanner according to claim 2 or 3, wherein said laser scanner (1) comprises a horizontal rotation driver, a vertical rotation driver and an image pickup module (8), wherein said image pickup module is designed such that a position of a pixel with respect to an image center of said image pickup module (8) corresponds to a deflection angle with respect to a reference optical axis of said optical axis deflector (21), a deflection angle of said object is detected from an image, and said laser scanner is configured to rotate by said horizontal rotation driver and said vertical rotation driver in such a manner that said object is placed at said image center.

6. A tracking program, in a laser scanner (1), making a control module (16) to execute each step in claim 1.
